(19) Europäisches Patentamt / European Patent Office / Office européen des brevets

(11) **EP 3 256 919 B1**

(12) **EUROPÄISCHE PATENTSCHRIFT**

(45) Veröffentlichungstag und Bekanntmachung des Hinweises auf die Patenterteilung:
**06.03.2019   Patentblatt 2019/10**

(21) Anmeldenummer: **16713414.7**

(22) Anmeldetag: **30.03.2016**

(51) Int Cl.:
**G05B 19/418** (2006.01)

(86) Internationale Anmeldenummer:
**PCT/EP2016/056906**

(87) Internationale Veröffentlichungsnummer:
**WO 2016/165940 (20.10.2016 Gazette 2016/42)**

(54) **BILDUNG VON RÜSTFAMILIEN FÜR EIN BEARBEITUNGSSYSTEM MIT EINER WERKZEUGMASCHINE**

FORMATION OF SET-UP FAMILIES FOR A MACHINING SYSTEM HAVING A MACHINE TOOL

FORMATION DE FAMILLES D'ÉQUIPEMENTS POUR UN SYSTÈME D'USINAGE COMPORTANT UNE MACHINE-OUTIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.04.2015   DE 102015206741**

(43) Veröffentlichungstag der Anmeldung:
**20.12.2017   Patentblatt 2017/51**

(73) Patentinhaber: **Siemens Aktiengesellschaft 80333 München (DE)**

(72) Erfinder:
• **PFAFFINGER, Alexander 81739 München (DE)**
• **ROYER, Christian 85521 Ottobrunn (DE)**

(56) Entgegenhaltungen:
• R.B.R. DE SOUZA ET AL: "A tool cluster based strategy for the management of cutting tools in flexible manufacturing systems", JOURNAL OF OPERATIONS MANAGEMENT, Bd. 10, Nr. 1, 1. Januar 1991 (1991-01-01) , Seiten 73-91, XP055283607, US ISSN: 0272-6963, DOI: 10.1016/0272-6963(91)90036-W
• M. MENDES ET AL: "A mixed-integer linear programming model for part mix, tool allocation, and process plan selection in CNC machining centres", INTERNATIONAL JOURNAL OF MACHINE TOOLS AND MANUFACTURE, Bd. 43, Nr. 11, 1. September 2003 (2003-09-01), Seiten 1179-1184, XP055283617, US ISSN: 0890-6955, DOI: 10.1016/S0890-6955(03)00052-X
• KATO K ET AL: "Heuristics based integrated design environment for planning and scheduling in FMS", PROCEEDINGS OF THE INTERNATIONAL CONFERENCE ON SYSTEMS, MAN AND CYBERNETICS. LE TOUQUET, OCT. 17 - 20, 1993; [PROCEEDINGS OF THE INTERNATIONAL CONFERENCE ON SYSTEMS, MAN AND CYBERNETICS], NEW YORK, IEEE, US, Bd. -, 17. Oktober 1993 (1993-10-17), Seiten 737-742, XP010132482, DOI: 10.1109/ICSMC.1993.390803 ISBN: 978-0-7803-0911-1
• DE SOUZA R: "Tool-provisioning strategies for flexible manufacturing systems", ROBOTICS AND COMPUTER INTEGRATED MANUFACTURING, ELSEVIER SCIENCE PUBLISHERS BV., BARKING, GB, Bd. 13, Nr. 1, 1. März 1997 (1997-03-01), Seiten 31-39, XP004056856, ISSN: 0736-5845, DOI: 10.1016/S0736-5845(96)00027-0
• GRANGER C: "SOFTWARE STRATEGIES FOR CELL MANAGEMENT", MACHINERY AND PRODUCTION ENGINEERING, MACHINERY PUBLISHING CO.LTD. BURGESS HILL, GB, Bd. 148, Nr. 3789, 7. September 1990 (1990-09-07), Seite 32/33,35, XP000151253, ISSN: 0024-919X

# EP 3 256 919 B1

**Beschreibung**

Die vorliegende Erfindung betrifft eine Technik zur Steuerung eines Bearbeitungssystems mit einer Werkzeugmaschine. Insbesondere betrifft die Erfindung die Bildung von Rüstfamilien von Werkstücken zur Bearbeitung mit der Werkzeugmaschine.

Eine Werkzeugmaschine ist dazu eingerichtet, ein Werkstück mittels mehreren unterschiedlichen Werkzeugen zu bearbeiten. Insbesondere kann die Werkzeugmaschine eine Stanzmaschine umfassen, die ein flächiges Werkstück wie ein Blech bearbeitet. Dazu kann die Werkzeugmaschine ein Werkzeugmagazin mit Stellplätzen für eine vorbestimmte Anzahl von Werkzeugen umfassen. Die Werkzeugmaschine kann eines der Werkzeuge aus dem Werkzeugmagazin aufnehmen und damit einen oder mehrere Bearbeitungsschritte an dem Werkstück durchführen. Unterschiedliche Werkstücke erfordern zur Bearbeitung üblicherweise unterschiedliche Werkzeuge, sodass das Werkzeugmagazin für ein anderes Werkstück erst passend bestückt werden muss.

Das Aufrüsten von Werkzeugen im Werkzeugmagazin kann aufwändig sein und qualifiziertes Personal erfordern. Außerdem besteht die Gefahr, dass die Werkzeugmaschine während eines Montagevorgangs eines Werkzeugs nicht arbeiten kann und stillsteht.

R.B.R. DE SOUZA ET AL: "A tool cluster based strategy for the management of cutting tools in flexible manufacturing systems", JOURNAL OF OPERATIONS MANAGEMENT, Bd. 10, Nr. 1, 1. Januar 1991 (1991-01-01), Seiten 73-91, betrifft eine Werkzeugverwaltung für eine Werkzeugmaschine.

KATO K ET AL: "Heuristics based integrated design environment for planning and scheduling in FMS", Proc. Intl Conf SMC 93; 17. Oktober 1993 (1993-10-17), Seiten 737-742, schlägt eine Heuristik zur Ablaufplanung an einem flexiblen Fertigungssystem vor.

Der Erfindung liegt die Aufgabe zugrunde, eine verbesserte Technik zur Gruppierung von Werkstücken bereitzustellen, um die Werkzeugmaschine mit verringertem Aufwand betreiben zu können. Die Erfindung löst diese Aufgabe mittels der Gegenstände der unabhängigen Ansprüche. Unteransprüche geben bevorzugte Ausführungsformen wieder.

Eine Werkzeugmaschine hat ein Werkzeugmagazin für Werkzeuge, von denen die Werkzeugmaschine jeweils eines zur Bearbeitung eines Werkstücks aufnehmen kann. Ein Verfahren zur Steuerung der Werkzeugmaschine umfasst Schritte des Erfassens von zu bearbeitenden Werkstücken und des Gruppierens von erfassten Werkstücken zu Rüstfamilien derart, dass eine der Rüstfamilie zugeordnete Rüstung ausreicht, um die Werkstücke der Rüstfamilie zu bearbeiten. Dabei umfasst die Rüstung Werkzeuge, die gleichzeitig im Werkzeugmagazin aufgerüstet werden können und die Rüstfamilien werden derart gebildet, dass die Zahl der Werkzeuge, die zur Bearbeitung der erfassten Werkstücke aufzurüsten sind, möglichst minimiert ist. Bevorzugterweise werden anschließend Werkstücke der Rüstfamilien mittels der Werkzeugmaschine bearbeitet.

Durch das beschriebene Gruppieren kann der Aufwand, der zum Bereitstellen der Werkzeuge im Werkzeugmagazin zu betreiben ist, minimiert sein. Mehrere unterschiedliche Werkstücke können durch die Werkzeugmaschine bearbeitet werden, ohne ein Werkzeug nachzurüsten. Die Werkzeugmaschine kann dadurch mit verringerten Stillstandszeiten betrieben werden. Damit kann eine gesteigerte Wirtschaftlichkeit beim Betrieb der Werkzeugmaschine verbunden sein.

Wenigstens eines der Werkzeuge kann mehrere Teile umfassen, die vor dem Aufrüsten des Werkzeugs zusammen gesetzt werden müssen, und die Rüstfamilien können derart gebildet werden, dass die Zahl der Werkzeuge, die vor dem Aufrüsten zusammenzusetzen sind, möglichst minimiert ist.

Eines der Werkzeuge kann insbesondere ein Stanzwerkzeug, ein Tiefziehwerkzeug oder ein Prägewerkzeug umfassen, die als Teile jeweils mindestens einen Stempel und eine Matritze umfassen. Die Teile können insbesondere in Abhängigkeit des Werkstücks, beispielsweise seines Materials, seiner Stärke oder eines bereits vorher erfolgten Arbeitsschritts miteinander kombiniert werden müssen, um die jeweils erforderliche Schnittluft zwischen den Teilen sicher zu stellen. Das Zusammensetzen kann ein Montieren der Teile umfassen, was eine manuelle Tätigkeit erfordern kann. Außerdem kann das Zusammensetzen noch weitere Zwischenschritte erfordern, beispielsweise ein Kalibrieren, ein Testen oder eine Qualitätssicherung. Ferner können die Teile in einem Bestand gehalten werden, aus dem die Teile einzeln ausgewählt und geholt werden müssen. Abgerüstete Werkzeuge können zerlegt werden und ihre Teile können in den Bestand zurückgeführt werden müssen.

Durch das Minimieren der aufzurüstenden Werkzeuge kann insbesondere der Aufwand für das Zusammensetzen der Werkzeuge verringert sein. Außerdem kann ein Umrüsten von Werkzeugen im Werkzeugmagazin, das ein Entfernen nicht mehr benötigter Werkzeuge umfassen kann, verringert sein. Die Werkzeugmaschine kann dadurch mit verbesserter Effizienz betrieben werden.

Es kann ein Bestand von Teilen vorgesehen sein und ein Teil des Bestands kann mit unterschiedlichen anderen Teilen des Bestands zu unterschiedlichen Werkzeugen zusammengesetzt werden. Ein aufzurüstendes Werkzeug kann beispielsweise ein Teil erfordern, das noch in einem abzurüstenden Werkzeug enthalten ist. Durch das Minimieren der aufzurüstenden Werkzeuge können Wartezeiten, die sich hierbei ergeben können, besonders effektiv minimiert werden.

In einer bevorzugten Ausführungsform ist eine Stückzahl gleichartiger Werkstücke in einem Auftrag zusammengefasst.

Für die Bildung der Rüstfamilien kann beispielsweise bekannt sein, mit welchen Aufträgen in einer absehbaren Zukunft zu rechnen ist. Dieser Zeitraum wird auch als langfristiger Planungszeitraum bezeichnet und kann beispielsweise einen Monat oder ein Jahr betragen. Möglicherweise ist aber anfangs noch nicht bekannt, welche genauen Stückzahlen der unterschiedlichen Werkstücke zu bearbeiten sind. Außerdem können die Aufträge einen Bearbeitungszeitpunkt tragen, der beispielsweise angibt, wann mit der Bearbeitung zu beginnen oder wann sie zu beenden ist. Die Bearbeitung der Aufträge wird also üblicherweise über den langfristigen Planungszeitraum verteilt. Dabei wird davon ausgegangen, dass die Verteilung im Wesentlichen gleich ist und keine übermäßigen Häufungen oder Pausen von Bearbeitungen über den langfristigen Planungszeitraum vorliegen.

Es kann ein zeitliches Intervall im langfristigen Planungszeitraum bestimmt werden, und es können diejenigen der erfassten Werkstücke bestimmt werden, die im bestimmten Intervall bearbeitet werden sollen. Dann werden nur diejenigen Werkzeuge der Rüstung aufgerüstet, die zur Bearbeitung der im Intervall zu bearbeitenden Werkstücke erforderlich sind. Danach können nur die für das Intervall bestimmten Werkstücke mittels der Werkzeugmaschine bearbeitet werden.

Diese Herangehensweise ist insbesondere dann vorteilhaft, wenn mehrere Intervalle innerhalb des langfristigen Planungszeitraums gebildet werden. Bevorzugterweise sind die Intervalle gleich lang oder ihre Anfänge sind gleichmäßig voneinander beabstandet. Das Intervall kann beispielsweise eine Woche oder einen Tag betragen. Zu Beginn eines Intervalls wird dann das Werkzeugmagazin passend für die aktuell vorliegenden Aufträge ausgerüstet, sodass Werkzeuge, die für aktuelle Aufträge bzw. Werkstücke nicht verwendet werden, nicht aufgerüstet werden. Gegenüber einer Aufrüstung von erforderlichen Werkzeugen jeweils nur für einen aktuellen Auftrag kann ein signifikanter Umrüstaufwand des Werkzeugmagazins eingespart werden.

Beispielsweise dann, wenn der langfristige Planungszeitraum kurz ist, beispielsweise eine Woche oder einen Tag, kann nur ein Intervall gebildet werden, das den gesamten langfristigen Planungszeitraum abdeckt. Dadurch können alle Werkstücke im gleichen Intervall bearbeitet werden und die oben beschriebenen Vorteile können sich auch ohne das Konzept von Intervallen erreichen lassen.

Bevorzugterweise werden die Rüstfamilien mittels Methoden der gemischt ganzzahligen Programmierung gebildet. Dadurch steht eine computergestützte Optimierungsmethode zur Verfügung, die vorteilhaft zur Lösung des beschriebenen Zuordnungsproblems verwendet werden kann. Die gemischt ganzzahlige Programmierung wird auch Mixed Integer Program (MIP) genannt und stellt ein bekanntes aber mächtiges Optimierungswerkzeug dar, das üblicherweise für eine andere Klasse von Problemen verwendet wird.

Mehrere gleichartige Werkstücke sind zu einem Auftrag zusammengefasst und die Rüstfamilien werden derart gebildet, dass über alle Werkstücke aller Rüstfamilien der Term $M * O$ möglichst maximiert ist, wobei M die Anzahl Werkzeuge, die zur Bearbeitung des Werkstücks aufgerüstet werden müssen, und O die Anzahl der insgesamt erfassten Aufträge für das Werkstück umfasst.

In einer Verfeinerung dieser Ausführungsform werden die Rüstfamilien derart gebildet, dass der Term $(M - E) * O$ möglichst maximiert ist, wobei E die Anzahl von Werkzeugen ist, die ausschließlich zur Bearbeitung des Werkstücks aufgerüstet werden müssen und für kein anderes Werkstück der Rüstfamilie benötigt werden.

Diese beiden Ausführungsformen werden unten anhand einer mathematischen Beschreibung noch genauer beschrieben.

Ein Auftrag, der keiner Rüstfamilie zugeordnet wird, kann separat bearbeitet werden, indem die für die Bearbeitung von Werkstücken des Auftrags erforderlichen Werkzeuge im Werkzeugmagazin gerüstet werden. Anschließend kann der Auftrag mittels der Werkzeugmaschine bearbeitet werden.

Dadurch kann eine Flexibilität der Planung der Bearbeitung von Werkstücken bzw. Aufträgen mittels der Werkzeugmaschine vergrößert werden. Außerdem können Werkstücke bzw. Aufträge, die nicht gut in eine der Rüstfamilien passen, trotzdem mittels der Werkzeugmaschine bearbeitet werden. Die Einsparungen an Aufrüstaufwand des Werkzeugmagazins können trotzdem genutzt werden. Diese Vorgehensweise ist insbesondere bei der Verwendung von Intervallen im langfristigen Planungszeitraum vorteilhaft.

Ein Computerprogrammprodukt umfasst Programmcodemittel zur Durchführung des beschriebenen Verfahrens wenn das Computerprogrammprodukt auf einer Ausführungseinrichtung abläuft oder auf einem computerlesbaren Medium gespeichert ist.

Eine Steuervorrichtung für die oben beschriebene Werkzeugmaschine ist dazu eingerichtet, folgende Schritte durchzuführen: Erfassen von zu bearbeitenden Werkstücken; und Gruppieren von erfassten Werkstücken zu Rüstfamilien derart, dass eine der Rüstfamilie zugeordnete Rüstung ausreicht, um die Werkstücke der Rüstfamilie zu bearbeiten. Dabei umfasst die Rüstung Werkzeuge, die gleichzeitig im Werkzeugmagazin aufgerüstet werden können, und die Rüstfamilien werden derart gebildet, dass die Zahl der Werkzeuge, die zur Bearbeitung der erfassten Werkstücke aufzurüsten sind, möglichst minimiert ist. Die Steuervorrichtung kann außerdem dazu eingerichtet sein, die Bearbeitung von Werkstücken der Rüstfamilie mittels der Werkzeugmaschine zu steuern.

Ein Bearbeitungssystem umfasst die oben beschriebene Werkzeugmaschine sowie die genannte Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei

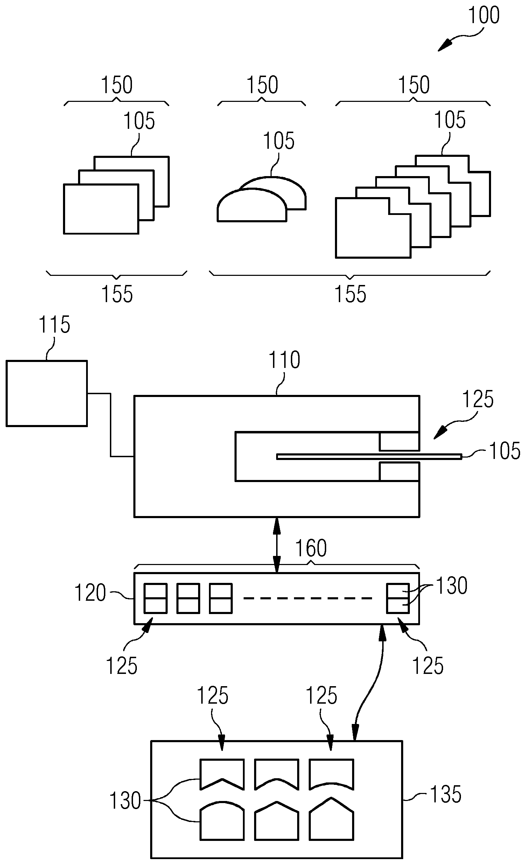

FIG 1 ein Bearbeitungssystem mit einer Werkzeugmaschine darstellt.

Genauere Beschreibung von Ausführungsbeispielen

FIG 1 zeigt ein Bearbeitungssystem 100 zur Bearbeitung von Werkstücken 105. Das Bearbeitungssystem 100 umfasst eine Werkzeugmaschine 110 mit einer Steuervorrichtung 115. Die Werkzeugmaschine kann insbesondere eine Stanzmaschine umfassen, beispielsweise eine Trumatic 5000 oder Trumatic 7000.

Die Werkzeugmaschine 110 umfasst ein Werkzeugmagazin 120 zur Aufnahme einer vorbestimmten Anzahl Werkzeuge 125 und ist dazu eingerichtet, ein Werkstück 105 mittels eines oder mehrerer Werkzeuge 125 zu bearbeiten, die sie selbsttätig aus dem Werkzeugmagazin aufnehmen kann. In einer Ausführungsform ist das Werkzeugmagazin 120 unterteilt in ein Linearmagazin und ein Rundmagazin, wobei das Rundmagazin nachgerüstet werden kann, während die Werkzeugmaschine 110 ein Werkstück 105 bearbeitet. Im vorliegenden Fall wird von einem einheitlichen Werkzeugmagazin 120 ausgegangen, das bei der Trumatic 5000 beispielsweise 71 und bei der Trumatic 7000 beispielsweise 91 Werkzeuge 125 fassen kann.

Einige der Werkzeuge 125 können aus zwei oder mehr Teilen 130 bestehen. Beispielsweise kann für einen Stanz-, Präge- oder Tiefziehvorgang ein Teil 130 eine Matrize und ein anderes Teil 130 einen Stempel umfassen. Für einen vorbestimmten Bearbeitungsvorgang an einem Werkstück 105 kann das benötigte Werkzeug 125 beispielsweise in Abhängigkeit der Materialstärke des Werkstücks 105 unterschiedliche Teile 130 erfordern, um eine vorbestimmte Schnittluft sicher zu stellen. Es können auch in Abhängigkeit des Materials oder eines anderen Parameters des Werkstücks 105 unterschiedliche Teile 130 benötigt werden. Die einzelnen Teile 130 werden in einem Bestand 135 vorgehalten, der beispielsweise als Lagersystem realisiert sein kann. Die Menge der aus Teilen 130 zu montierenden Werkzeuge 125 ist üblicherweise eine Teilmenge der im Werkzeugmagazin 120 aufzurüstenden Werkzeuge 125.

Um ein Werkzeug 125 im Werkzeugmagazin 120 aufzurüsten müssen üblicherweise alle erforderlichen Teile 130 bestimmt und aus dem Bestand 135 beschafft werden; anschließend müssen die Teile 130 zum Werkzeug 125 zusammengefügt werden, wozu üblicherweise eine qualifizierte Fachkraft erforderlich ist. Üblicherweise muss beim Aufrüsten eines Werkzeugs 125 auch ein anderes abgerüstet werden, um Platz im Werkzeugmagazin 120 zu schaffen. Das abgerüstete Werkzeug 125 wird üblicherweise in seine Teile 130 zerlegt und die Teile 130 werden in den Bestand 135 zurückgeführt. Das Abrüsten kann auch als Teil des Aufrüstens verstanden werden.

Das Vorbereiten des Werkzeugs 125 ist aufwändig und erfordert potentiell viel Zeit. Zur Bearbeitung eines oder mehrerer gleichartiger Werkstücke 105 eines ersten Typs werden üblicherweise die dazu erforderlichen Werkzeuge 125 im Werkzeugmagazin 120 aufgerüstet, das oder die Werkstücke 105 werden bearbeitet, und die Werkzeuge 125 werden wieder abgerüstet. Sollen anschließend eines oder mehrere gleichartige Werkstücke 105 eines zweiten Typs bearbeitet werden, so wiederholt sich der Vorgang. Überdecken sich die Mengen der Werkzeuge 125 wenigstens teilweise, wird also wenigstens ein Werkzeug 125 für die Bearbeitung der Werkstücke beider Typen benötigt, so kann das Werkzeug gerüstet bleiben, statt es beim Wechsel von der Bearbeitung von Werkstücken 105 des ersten Typs zur Bearbeitung von Werkstücken 105 des zweiten Typs zuerst ab- und dann wieder aufzurüsten.

Gedanke der Erfindung ist, Gruppen von Werkstücken 105 möglichst so zu bilden, dass sich die den Werkstücken 105 zugeordneten Mengen der für die Bearbeitung erforderlichen Werkzeuge 125 möglichst überdecken, sodass das Werkzeugmagazin 120 nur einmal aufgerüstet werden muss, um Werkstücke 105 mehrerer unterschiedlicher Typen mittels der Werkzeugmaschine 110 bearbeitet zu können.

Die Werkzeugmaschine 110 wird üblicherweise nicht nur verwendet, um einzelne Werkstücke 105 zu bearbeiten, sondern Aufträge 150, wobei jedem Auftrag 150 eine Stückzahl gleichartiger Werkstücke 105 zugeordnet ist, die auf die gleiche Weise, also jeweils unter Verwendung der gleichen Werkzeuge 125, bearbeitet werden. Für eine Fertigung eines einzelnen Werkstücks 105 kann die Stückzahl des zugehörigen Auftrags 150 gleich Eins sein. Werkstücke 105 eines Auftrags 150 werden üblicherweise nacheinander bearbeitet, ohne dass die Rüstung 160 zwischendurch geändert wird. Zur Bearbeitung von Werkstücken 105 kann eine Fördereinheit (nicht dargestellt) vorgesehen sein, die unbearbeitete Werkstücke 105 nacheinander in die Werkzeugmaschine 110 fördert und bearbeitete Werkstücke 105 entnimmt. Die Werkzeugmaschine 110 kann dadurch längerfristig unbeaufsichtigt arbeiten.

Üblicherweise ist zumindest näherungsweise bekannt, welche Aufträge 150 über einen langfristigen Planungszeitraum hinweg zu bearbeiten sein werden. Der langfristige Planungszeitraum kann beispielsweise ein Jahr betragen. Von den tatsächlich innerhalb des langfristigen Planungszeitraums auszuführenden Aufträgen 150 können zu Beginn des Zeitraums beispielsweise ca. 90% bekannt sein. Dabei können angenommene Stückzahlen der Aufträge 150 geschätzt sein. Diese Informationen können beispielsweise auf der Basis einer Analyse eines früheren Bearbeitungszeitraums bestimmt werden.

Es wird vorgeschlagen, die Werkstücke 105 der innerhalb eines langfristigen Planungszeitraums vorliegenden Aufträge 150 zu Rüstfamilien 155 zu gruppieren, wobei jeder Rüstfamilie 155 eine Rüstung 160 von Werkzeugen 125 zugeordnet ist. Die Werkzeuge 125 der Rüstung 160 reichen aus, um alle Werkstücke der Rüstfamilie 155 zu bearbeiten und können gleichzeitig im Werkzeugmagazin 120 gerüstet werden. Diese Zuordnung wird bevorzugterweise mittels der Steuervorrichtung 115 durchgeführt.

Die Bearbeitung der Aufträge 150 erfolgt dann nicht mehr auftragsbezogen sondern auf eine Rüstfamilie 155 bezogen, indem die Werkzeugmaschine 110 von der Steuervorrichtung 115 dazu angesteuert wird, alle vorliegenden bzw. zur Durchführung freigegebenen Aufträge 150 für die Werkstücke 105 einer Rüstfamilie 155 ohne Rüstwechsel mit der gleichen Rüstung 160 zu bearbeiten.

Beispielsweise kann der langfristige Planungszeitraum in kürzere Zeitabschnitte unterteilt sein, insbesondere Intervalle gleicher Länge. Ein Zeitabschnitt wird auch kurzfristiger Planungszeitraum oder kurzfristiger Planungshorizont genannt. Beispielsweise kann der langfristige Planungszeitraum ca. 1 Jahr betragen und die Intervalle jeweils ca. 1 Woche.

Jedem Auftrag 150 kann ein Bearbeitungszeitpunkt zugeordnet sein, wobei in jedem Intervall diejenigen Aufträge 150 bearbeitet werden sollen, deren Bearbeitungszeitpunkte in das Intervall fallen. Der Bearbeitungszeitpunkt eines Auftrags 150 ist üblicherweise vor Beginn des langfristigen Planungszeitraums nicht bekannt. Es wird jedoch davon ausgegangen, dass spätestens zu Beginn eines vorbestimmten kurzfristigen Planungszeitraums jeweils bekannt ist, welche Aufträge 150 in diesem Planungszeitraum zu bearbeiten sind. Üblicherweise kann davon ausgegangen werden, dass die Bearbeitungszeitpunkte der Aufträge 150 im Wesentlichen über den langfristigen Planungszeitraum gleichverteilt sind. Von einer Rüstung 160 werden zu Beginn eines Intervalls bevorzugterweise nur diejenigen Werkzeuge 125 im Werkzeugmagazin 120 gerüstet, für die auch wenigstens ein Werkstück 105 bzw. Auftrag 155 der Rüstfamilie 155 im aktuellen Intervall bearbeitet werden soll.

Jedem Auftrag 150 ist üblicherweise ein Werkstück 105 bzw. ein Werkstücktyp zugeordnet, von dem eine zugeordnete Stückzahl bearbeitet werden soll. Alle Werkstücke 105 eines Auftrags sind gleichartig und die Bearbeitung soll ebenfalls gleichartig sein. Zur Bearbeitung der Werkstücke 105 eines Auftrags 150 ist eine vorbestimmte Menge von Werkzeugen 125 erforderlich, die im Werkzeugmagazin 120 der Werkzeugmaschine 110 aufgerüstet werden müssen. Diese Menge wird Rüstung 160 genannt. Eine Rüstung 160 kann sich also in entsprechender Weise auf ein Werkstück 105, dessen Werkstücktyp oder einen Auftrag 150 zur Bearbeitung eines Werkstücks 105 beziehen.

Das Aufrüsten eines Werkzeugs 125 umfasst eine Auswahl von Teilen 130 aus einem vorbestimmten Bestand 135 und eine Montage des Werkzeugs 125 aus den ausgewählten Teilen 130. Das Abrüsten umfasst üblicherweise das Zerlegen des Werkzeugs 125 in seine Teile 130, wobei der dafür nötige Aufwand hier nicht näher betrachtet wird. Es kann weiter davon ausgegangen werden, dass ein Rüstwechsel stets vollständig erfolgt, das heißt, dass beim Wechsel von einer Rüstung 160 auf eine andere keine Werkzeuge 125 im Werkzeugmagazin 120 verbleiben.

Bewertungsmodell

Im Folgenden wird ein Bewertungsmodell vorgeschlagen, mit dem sich Rüstfamilien 155 für die Werkzeugmaschine 110 hinsichtlich eines Gütekriteriums "Einsparung von Werkzeugvorbereitungen" bewerten lassen. Anschließend werden zwei Gemischt Ganzzahlige Lineare Optimierungsprobleme (MIPs) vorgestellt, mit denen sich Rüstfamilien 155 bestimmen lassen, die hinsichtlich dieses Gütekriteriums heuristisch gute Lösungen liefern.

Ziel der im Folgenden beschriebenen Herangehensweise ist, den Aufwand für das Aufrüsten des Werkzeugmagazins 120 für die Bearbeitung von Aufträgen, inklusive dem Montieren der zu rüstenden Werkzeuge, zu minimieren. Dazu sollen Rüstfamilien 155 gebildet werden, die jeweils möglichst mehrere Werkstücke 105 umfassen. Die Werkstücke 105 einer Rüstfamilie 155 können alle mit der gleichen Rüstung 160 bearbeitet werden und die Rüstung 160 findet vollständig Platz im Werkzeugmagazin 120. Umfasst die Rüstfamilie 155 mehr Werkstücke 105 als gerade zur Bearbeitung vorliegen, so werden beim Rüstwechsel bevorzugterweise nur diejenigen Werkzeuge 125 gerüstet, die für die Bearbeitung von vorliegenden bzw. zur Bearbeitung vorgesehenen Aufträgen 150 erforderlich ist.

Zur formalen Betrachtung gelten folgende Bezeichnungen:

$c$ Werkstück

$C$ Menge der Werkstücke (Werkstücktypen)

$T$ Menge der Werkzeuge

$T^s$ Menge der Werkzeuge, die zur Bearbeitung montiert werden müssen (Rüstung)

$T_C$ Menge der für ceC benötigten Werkzeuge

$T_c^s$ Menge der für $c \in C$ benötigten Werkzeuge, die zur Bearbeitung montiert werden müssen

$C_t$ Menge der Werkstücktypen, die Werkzeug t benötigen

$Cap$ Kapazität des Werkzeugmagazins

Order$_c$ Anzahl der Aufträge für Werkstück c im langfristigen Planungszeitraum
cl Rüstfamilie

Stochastisches Bewertungsmodell

Es sei

$$n_k = \frac{Anzahl\ Tage\ im\ langfristigen\ Planungszeitraum}{Anzahl\ Tage\ im\ kurzfristigen\ Planungszeitraum}$$

Es gelte, dass Order$_c$ nicht größer als $n_k$ ist. (Sollte dies nicht der Fall, so setzt man Order$_c$ auf diesen Wert).
$p_c$ := Wahrscheinlichkeit, dass der Auftrag im kurzfristigen Planungszeitraum gefertigt wird.
Bevorzugt kann davon ausgegangen werden, dass sich die Aufträge gleichmäßig auf die kurzfristigen Planungszeiträume verteilen und weiter bevorzugt davon, dass in einem kurzfristigen Planungszeitraum für ein Werkstück höchstens ein Auftrag zu fertigen ist. Außerdem sind die Aufträge bevorzugt voneinander unabhängig. Damit ist die Wahrscheinlichkeit für ein bestimmtes Werkstück, in einem kurzfristigen Planungszeitraum gefertigt werden zu müssen:

$$p_c = \frac{Order_c}{n_k}$$

Werden Werkstücke nicht separat voneinander gefertigt, sondern in einer Rüstfamilie cl, so lassen sich gewöhnlich Werkzeugvorbereitungen einsparen, da Werkzeuge, die für mehrere dieser Aufträge mit unterschiedlichen Werkstücken benötigt werden, nur einmal montiert werden müssen.
Der langfristige Planungszeitraum kann in Intervalle - auch kurzfristige Planungszeiträume genannt - aufgeteilt werden, die üblicherweise gleiche Länge haben.

Separate Werkzeugvorbereitungen für jeden Auftrag

Der Erwartungswert für die Anzahl der Werkzeugvorbereitungen für eine Gruppe cl von Werkstücken in einem Intervall, wenn für jeden Auftrag aus cl die benötigten Werkzeuge extra aufgerüstet und nach der Bearbeitung wieder zerlegt werden, ist:

$$EW\left(Werkzeugvorbereitungen\ Separat\right) = \sum_{c \in cl} \left|T_c^s\right| p_c$$

Werkzeugvorbereitungen für eine Rüstfamilie cl

In einem Intervall werden gewöhnlich Rüstungen mehrerer Rüstfamilien gerüstet.

Mit $T_{cl}^s$ wird die Menge aller Werkzeuge bezeichnet, die von Werkstücken aus cl benötigt werden und die zur Bearbeitung montiert werden müssen.

Die Wahrscheinlichkeit, dass ein Werkzeug $t \in T_{cl}^s$ im Intervall für Rüstfamilie *cl* benötigt wird und montiert werden muss, ist:

```
p(mindestens ein c∈cl mit t∈T_c wird gefertigt)

= 1 - p(kein c∈cl mit t∈T_c wird gefertigt)
```

$$= 1 - \prod_{c \in cl | t \in c} \left(1 - p_c\right)$$

Für den Erwartungswert für die Anzahl der Werkzeugvorbereitungen für eine Rüstfamilie $cl \in Cl$ in einem Intervall ergibt sich damit:

$$EW\left(Werkzeugvorbereitungen \ für \ Rüstfamilie \ cl\right) = \sum_{t \in T_{cl}^s}\left(1 - \prod_{c \in cl|t \in c}\left(1 - p_c\right)\right)$$

Der Erwartungswert für die Anzahl der Werkzeugvorbereitungen für eine Menge von Rüstfamilien $Cl$ im Intervall ergibt sich aus der Summe der einzelnen Erwartungswerte für die Rüstfamilien $cl \in Cl$:

$$EW\left(Werkzeugvorbereitungen \ für \ alle \ Rüstfamilien\right) = \sum_{cl \in Cl}\sum_{t \in T_{cl}^s}\left(1 - \prod_{c \in cl|t \in c}\left(1 - p_c\right)\right)$$

Einsparung an Werkzeugvorbereitungen durch die Rüstfamilie cl

Die erwarteten Einsparungen an Werkzeugvorbereitungen durch Verwendung der Rüstfamilie cl ergibt sich aus der Differenz der Erwartungswerte für die Vorbereitungsaufwände ohne Rüstfamilien (vgl. II.) und mit Rüstfamilien (vgl. III.):

$$\sum_{c \in cl}\left|T_c^s\right|p_c - \sum_{t \in T_{cl}^s}\left(1 - \prod_{c \in cl|t \in c}\left(1 - p_c\right)\right)$$

Für die Einsparungen für eine Menge von Rüstfamilien Cl ergibt sich entsprechend:

$$\sum_{cl \in Cl}\left(\sum_{c \in cl}\left|T_c^s\right|p_c - \sum_{t \in T_{cl}^s}\left(1 - \prod_{c \in cl|t \in c}\left(1 - p_c\right)\right)\right).$$

Optimierungsmodell

Ziel ist es, eine vorgegebene Anzahl Rüstfamilien zu bestimmen, sodass die Einsparung an Werkzeugvorbereitungen möglichst maximiert ist. Das entsprechende Optimierungsmodell ist aufgrund der oben angegebenen Einsparungsfunktion nichtlinear. Als heuristischer Lösungsansatz wird ein MIP vorgeschlagen, in welchem der erste Term der Einsparungsfunktion maximiert wird.
In der MIP-Formulierung gelten die folgenden zusätzlichen Bezeichnungen.

**Zusätzliche Indices**

$Cl$    Menge der zu bildenden Rüstfamilien

**Binärvariablen**

$Assign_{c,cl}$ Variable, die angibt, ob ein Werkstück $c$ zur Rüstfamilie $cl$ *zugeordnet wird. (In diesem Fall nimmt sie den Wert 1 an, anderenfalls den Wert 0)*
$Setup_{t,cl}$ Variable, die angibt, ob ein Werkzeug $t$ in der Rüstung der Rüstfamilie $cl$ gerüstet werden muss. *(In diesem Fall nimmt sie den Wert 1 an, anderenfalls den Wert 0)*

P-Formulierung

Ein gemischt ganzzahliges Programm (MIP) kann verwendet werden, um das gegebene Optimierungsproblem zu lösen. Zur Lösung des MIP stehen Standardwerkzeuge zur Verfügung, beispielsweise GAMS, Scip oder Gurobi, die auf einem handelsüblichen Computer ausgeführt werden können. Die hier vorgeschlagene Technik ist zwar nicht auf MIP beschränkt, jedoch wurde erkannt, wie mittels MIP ein schwierig zu formulierendes und schwierig zu optimierendes Problem mit verringertem Aufwand gelöst werden kann. Dabei ist ein Vorteil von MIP, dass zu jeder gefundenen Lösung üblicherweise bekannt ist, wie weit (bezüglich der Zielfunktion) sie von einer optimalen Lösung entfernt ist ("gap"). In Abhängigkeit dieser Information kann die Suche nach einer optimierten Lösung weiter betrieben oder abgebrochen werden.

Es wird vorgeschlagen, ein MIP mit folgender Zielfunktion auszustatten:

$$\text{maximize} \sum_{cl \in Cl} \sum_{c \in C} |T_c^S| \, \text{Order}_c \, \text{Assign}_{c,cl}$$

s.t.:

$$(1) \sum_{cl \in Cl} \text{Assign}_{c,cl} \leq 1 \qquad\qquad c \in C$$

$$(2) \sum_{c \in C_t} \text{Assign}_{c,cl} \leq |C_t| \, \text{Setup}_{t,cl} \qquad\qquad t \in T, cl \in Cl$$

$$(3) \sum_{t \in T} \text{Setup}_{t,cl} \leq \text{Cap} \qquad\qquad cl \in Cl$$

$$\text{Setup}_{t,cl} \in \{0,1\} \qquad\qquad t \in T, cl \in Cl$$

$$\text{Assign}_{c,cl} \in \{0,1\} \qquad\qquad c \in C, cl \in Cl$$

Erläuterungen:

Zu (1): Jeder Auftrag darf höchstens einer Rüstfamilie zugeordnet werden.
Zu (2): Ein Werkzeug muss gerüstet werden, wenn mindestens ein Werkstück, das dieses Werkzeug benötigt, der Rüstfamilie zugeordnet ist.
Zu (3): Die zu rüstenden Werkzeuge dürfen die Kapazität der Maschine nicht übersteigen.

Verbesserte IP-Formulierung

Das Argument der Zielfunktion von (VI.) lässt sich auch folgendermaßen umformulieren:

$$\sum_{cl \in Cl} \sum_{c \in C} |T_c^S| \, \text{Order}_c \, \text{Assign}_{c,cl} = \sum_{cl \in Cl} \sum_{t \in T^S} \sum_{c \in C_t} \text{Order}_c \, \text{Assign}_{c,cl}$$

Werkzeuge, die nur jeweils für ein Werkstück der Rüstfamilie benutzt werden, gehen in die oben angegebene MaximierungsZielfunktion positiv ein und werden "belohnt", obwohl es egal ist, ob sie im Rahmen der Rüstfamilie oder in einer EinzelFertigung der Werkstücke auch genau einmal montiert werden. Bei diesen Werkzeugen spart man sich durch die Bildung der Rüstfamilie tatsächlich keine Werkzeugvorbereitung. Das MIP kann wie folgt abgeändert werden, um diesen Effekt zu eliminieren.

Als zusätzliche Hilfsvariablen werden $z_{t,cl}$ eingeführt, deren Summe zu maximieren ist, und die durch die neuen Restriktionen (4) und (5) begrenzt werden. Der Zielfunktionswert $z_{t,cl}$ ist 0, falls das Werkzeug t nur für ein Werkstück der Rüstfamilie cl verwendet wird. Ansonsten entspricht er der Anzahl der Werkzeugvorbereitungen für t, wenn alle Aufträge einzeln gefertigt werden würden.

$$\text{maximize} \sum_{cl \in Cl} \sum_{t \in T^S} z_{t,cl}$$

s.t.:

$$(1) \quad \sum_{cl \in Cl} \text{Assign}_{c,cl} \leq 1 \qquad\qquad\qquad c \in C$$

$$(2) \quad \sum_{c \in C_t} \text{Assign}_{c,cl} \leq |C_t| \, \text{Setup}_{t,cl} \qquad\qquad t \in T, cl \in Cl$$

$$(3) \quad \sum_{t \in T} \text{Setup}_{t,cl} \leq \text{Cap} \qquad\qquad\qquad cl \in Cl$$

$$(4) \quad \sum_{c \in C_t} \text{Order}_c \, \text{Assign}_{c,cl} \geq z_{t,cl} \qquad\qquad t \in T^S, cl \in Cl$$

$$(5) \quad M \left( \sum_{c \in C_t} \text{Assign}_{c,cl} - \text{Setup}_{t,cl} \right) \geq z_{t,cl} \qquad t \in T^S, cl \in Cl$$

$$\text{Setup}_{t,cl} \in \{0,1\} \qquad\qquad\qquad t \in T^S, cl \in Cl$$

$$\text{Assign}_{c,cl} \in \{0,1\} \qquad\qquad\qquad c \in C, cl \in Cl$$

$$z_{t,cl} \geq 0 \qquad\qquad\qquad t \in T^S, cl \in Cl$$

Erläuterungen:

Zu (1): Jedes Werkstück darf höchstens einer Rüstfamilie zugeordnet werden.
Zu (2): Ein Werkzeug muss gerüstet werden, wenn mindestens ein Werkstück, das dieses Werkzeug benötigt, der Rüstfamilie zugeordnet ist.
Zu (3): Die zu rüstenden Werkzeuge dürfen die Kapazität der Maschine nicht übersteigen.
Zu (4): Der Zielfunktionswert $z_{t,cl}$ ist nach oben beschränkt durch die Anzahl der Werkzeugvorbereitungen für t, wenn alle Werkstücke einzeln gefertigt werden würden.
Ohne die Restriktion (5) würde die Maximierungszielfunktion dafür sorgen, dass hier "=" gelten würde und das Modell wäre äquivalent zur erstgenannten MIP-Formulierung.

Zu (5): M steht für eine große aber nicht zu große Zahl. Ein denkbarer Wert für M wäre z.B. $\sum_{c \in Cl} Order_c$ · Wird ein Werkzeug t nur in genau einem Werkstück der Rüstfamilie cl verwendet, so ist $\sum_{c \in Cl} Assign_{c,cl} = 1$ und Setup$_{t,cl}$=1 und damit $z_{t,cl} = 0$.

Mögliche Vereinfachung

Es kann sinnvoll sein, den langfristigen Planungshorizont mit dem kurzfristigen (dem Intervall) gleichzusetzen. Die Planungshorizonte müssen damit praktisch nicht mehr berücksichtigt werden. In diesem Fall ist C die Menge der zu fertigenden Werkstücke, es gilt $p_c$=1 und die unter (II.) und (III.) angegebenen Formeln vereinfachen sich wie folgt:

$$EW\left(\textit{Werkzeugvorbereitungen für alle Rüstfamilien}\right) = \left|T_{Cl}^{s}\right|$$

$$\sum_{c \in cl}\left|T_{c}^{s}\right|p_{c} - \sum_{c \in cl}\left|T_{cl}^{s}\right|$$

Einsparungen bei allen Rüstfamilien: Mit der Erfindung lassen sich dann Rüstfamilien für die zu fertigenden Werkstücke mit minimiertem Aufwand für Werkzeugvorbereitungen bilden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur Steuerung einer Werkzeugmaschine (110) mit einem Werkzeugmagazin (120) für Werkzeuge (125), von denen die Werkzeugmaschine (110) jeweils eines zur Bearbeitung eines Werkstücks (105) aufnehmen kann, wobei das Verfahren folgende Schritte umfasst:

   - Erfassen von zu bearbeitenden Werkstücken (105);
   - Gruppieren von erfassten Werkstücken (105) zu Rüstfamilien (155) derart, dass eine der Rüstfamilie (155) zugeordnete Rüstung (160) ausreicht, um die Werkstücke (105) der Rüstfamilie (155) zu bearbeiten;
   - wobei die Rüstung (160) Werkzeuge (125) umfasst, die gleichzeitig im Werkzeugmagazin (120) aufgerüstet werden können;
   - wobei die Rüstfamilien (155) derart gebildet werden, dass die Zahl der Werkzeuge (125), die zur Bearbeitung der erfassten Werkstücke (105) aufzurüsten sind, möglichst minimiert ist,

   **dadurch gekennzeichnet, dass**

   - mehrere gleichartige Werkstücke (105) zu einem Auftrag (150) zusammengefasst sind und die Rüstfamilien (155) derart gebildet werden, dass über alle Werkstücke (105) aller Rüstfamilien (155) der Term (M - E) * O möglichst maximiert ist;
   - wobei M die Anzahl Werkzeuge (125), die zur Bearbeitung des Werkstücks (105) aufgerüstet werden müssen,
   - E entweder null oder die Anzahl Werkzeuge (125), die ausschließlich zur Bearbeitung des Werkstücks (105) aufgerüstet werden müssen,
   - und O die Anzahl der insgesamt erfassten Aufträge (150) für das Werkstück (105) umfasst.

2. Verfahren nach Anspruch 1, ferner umfassend den Schritt des Bearbeitens von Werkstücken (105) der Rüstfamilien (155) mittels der Werkzeugmaschine (110).

3. Verfahren nach Anspruch 1 oder 2, wobei wenigstens eines der Werkzeuge (125) mehrere Teile (130) umfasst, die vor dem Aufrüsten des Werkzeugs (125) zusammen gesetzt werden müssen, und die Rüstfamilien (155) derart gebildet werden, dass die Zahl der Werkzeuge (125), die vor dem Aufrüsten zusammenzusetzen sind, möglichst minimiert ist.

4. Verfahren nach Anspruch 3, wobei ein Bestand (135) von Teilen (130) vorgesehen ist und ein Teil (130) des Bestands (135) mit unterschiedlichen anderen Teilen (130) des Bestands (135) zu unterschiedlichen Werkzeugen (125) zusammengesetzt werden kann.

5. Verfahren nach einem der vorangehenden Ansprüche, wobei ferner:

   - ein zeitliches Intervall bestimmt wird;
   - diejenigen der erfassten Werkstücke (105) bestimmt werden, die im bestimmten Intervall bearbeitet werden sollen;
   - nur diejenigen Werkzeuge (125) der Rüstung (160) aufgerüstet werden, die zur Bearbeitung der im Intervall zu bearbeitenden Werkstücke (105) erforderlich sind; und
   - nur die für das Intervall bestimmten Werkstücke (105) mittels der Werkzeugmaschine (110) bearbeitet werden.

**6.** Verfahren nach Anspruch 5, wobei alle Werkstücke (105) im gleichen Intervall bearbeitet werden sollen.

**7.** Verfahren nach einem der vorangehenden Ansprüche, wobei die Rüstfamilien (155) mittels Methoden der gemischt ganzzahligen Programmierung gebildet werden.

**8.** Verfahren nach einem der vorangehenden Ansprüche, wobei ein Auftrag (150), der keiner Rüstfamilie (155) zugeordnet wird, separat bearbeitet wird, indem die für die Bearbeitung von Werkstücken (105) des Auftrags (150) erforderlichen Werkzeuge (125) im Werkzeugmagazin (120) gerüstet werden und der Auftrag (150) mittels der Werkzeugmaschine (110) bearbeitet wird.

**9.** Computerprogrammprodukt mit Programmcodemitteln zur Durchführung des Verfahrens nach einem der vorangehenden Ansprüche, wenn es auf einer Ausführungseinrichtung (115) abläuft oder auf einem computerlesbaren Medium gespeichert ist.

**10.** Steuervorrichtung (115) für eine Werkzeugmaschine (110) mit einem Werkzeugmagazin (120) für Werkzeuge (125), von denen die Werkzeugmaschine (110) jeweils eines zur Bearbeitung eines Werkstücks (105) aufnehmen kann, wobei die Steuervorrichtung (115) dazu eingerichtet ist, folgende Schritte durchzuführen:

- Erfassen von zu bearbeitenden Werkstücken (105); und
- Gruppieren von erfassten Werkstücken (105) zu Rüstfamilien (155) derart, dass eine der Rüstfamilie (155) zugeordnete Rüstung (160) ausreicht, um die Werkstücke (105) der Rüstfamilie (155) zu bearbeiten,
- wobei die Rüstung (160) Werkzeuge (125) umfasst, die gleichzeitig im Werkzeugmagazin (120) aufgerüstet werden können,
- und wobei die Rüstfamilien (155) derart gebildet werden, dass die Zahl der Werkzeuge (125), die zur Bearbeitung der erfassten Werkstücke (105) aufzurüsten sind, möglichst minimiert ist,

**dadurch gekennzeichnet, dass**

- mehrere gleichartige Werkstücke (105) zu einem Auftrag (150) zusammengefasst sind und die Rüstfamilien (155) derart gebildet werden, dass über alle Werkstücke (105) aller Rüstfamilien (155) der Term (M - E) * O möglichst maximiert ist;
- wobei M die Anzahl Werkzeuge (125), die zur Bearbeitung des Werkstücks (105) aufgerüstet werden müssen,
- E entweder null oder die Anzahl Werkzeuge (125), die ausschließlich zur Bearbeitung des Werkstücks (105) aufgerüstet werden müssen,
- und O die Anzahl der insgesamt erfassten Aufträge (150) für das Werkstück (105) umfasst.

**11.** Bearbeitungssystem, umfassend eine Werkzeugmaschine (110) mit einem Werkzeugmagazin (120) für Werkzeuge (125), von denen die Werkzeugmaschine (110) jeweils eines zur Bearbeitung eines Werkstücks (105) aufnehmen kann, sowie eine Steuervorrichtung (115) nach Anspruch 10.

**Claims**

**1.** Method for the control of a machine tool (110) with a tool magazine (120) for tools (125), of which the machine tool (110) can hold one at any time for machining a workpiece (105), wherein the method comprises the following steps:

- registering workpieces (105) to be machined;
- grouping registered workpieces (105) into set-up families (155) in such a way that a set-up (160) assigned to the set-up family (155) is sufficient to machine the workpieces (105) of the set-up family (155);
- wherein the set-up (160) comprises tools (125) which can be loaded simultaneously in the tool magazine (120);
- wherein the set-up families (155) are formed in such a way that the number of tools (125) that are to be loaded for machining the registered workpieces (105) is minimized as far as possible,

**characterized in that**

- a plurality of workpieces (105) of the same type are grouped to form one order (150), and the set-up families (155) are formed in such a way that the expression (M - E) * O is maximized as far as possible over all the workpieces (105) of all the set-up families (155);

- wherein M is the number of tools (125) that must be loaded for machining the workpiece (105);
- E is either zero or the number of tools (125) that must be loaded exclusively for machining the workpiece (105);
- and O is the number of orders (150) registered altogether for the workpiece (105).

2. Method according to Claim 1, further comprising the step of machining workpieces (105) of the set-up families (155) by means of the machine tool (110).

3. Method according to Claim 1 or 2, wherein at least one of the tools (125) comprises a plurality of parts (130) which must be assembled before loading the tool (125), and the set-up families (155) are formed in such a way that the number of tools (125) that must be assembled prior to loading is minimized as far as possible.

4. Method according to Claim 3, wherein an inventory (135) of parts (130) is provided, and a part (130) of the inventory (135) can be put together with different other parts (130) of the inventory (135) to form different tools (125).

5. Method according to one of the previous claims, wherein furthermore:

   - a time interval is determined;
   - those of the registered workpieces (105) that should be machined in the determined interval are determined;
   - only those tools (125) of the set-up (160) are loaded that are required for machining the workpieces (105) that are to be machined in the interval; and
   - only those workpieces (105) specified for the interval are machined by means of the machine tool (110).

6. Method according to Claim 5, wherein all the workpieces (105) should be machined in the same interval.

7. Method according to one of the previous claims, wherein the set-up families (155) are formed by means of methods of mixed integer programming.

8. Method according to one of the previous claims, wherein an order (150) that is not assigned to any set-up family (155) is machined separately, in that tools (125) that are required for the machining of workpieces (105) of the order (150) are loaded in the tool magazine (120), and the order (150) is machined by means of the machine tool (110).

9. Computer program product with program code means for carrying out the method according to one of the previous claims when it runs on an execution apparatus (115) or is stored on a computer-readable medium.

10. Control apparatus (115) for a machine tool (110) with a tool magazine (120) for tools (125), of which the machine tool (110) can hold one at any time for machining a workpiece (105), wherein the control apparatus (115) is designed to carry out the following steps:

    - registering workpieces (105) to be machined; and
    - grouping registered workpieces (105) into set-up families (155) in such a way that a set-up (160) assigned to the set-up family (155) is sufficient to machine the workpieces (105) of the set-up family (155),
    - wherein the set-up (160) comprises tools (125) which can be loaded simultaneously in the tool magazine (120),
    - and wherein the set-up families (155) are formed in such a way that the number of tools (125) that are to be loaded for machining the registered workpieces (105) is minimized as far as possible,

    **characterized in that**

    - a plurality of workpieces (105) of the same type are grouped to form one order (150), and the set-up families (155) are formed in such a way that the expression (M - E) * O is maximized as far as possible over all the workpieces (105) of all the set-up families (155);
    - wherein M is the number of tools (125) that must be loaded for machining the workpiece (105);
    - E is either zero or the number of tools (125) that must be loaded exclusively for machining the workpiece (105);
    - and O is the number of orders (150) registered altogether for the workpiece (105).

11. Machining system comprising a machine tool (110) with a tool magazine (120) for tools (125), of which the machine tool (110) can hold one at any time for machining a workpiece (105), as well as a control apparatus (115) according to Claim 10.

**Revendications**

1. Procédé de commande d'une machine-outil (110) comprenant un magasin à outils (120) destiné à des outils (125), la machine-outil (110) pouvant accueillir respectivement l'un d'entre eux en vue de l'usinage d'une pièce d'oeuvre (105), dans lequel le procédé comprend les étapes ci-dessous :

   - enregistrement de pièces d'oeuvre (105) à usiner ;
   - regroupement des pièces d'oeuvre (105) enregistrées en familles d'équipement (155) de sorte qu'un équipement (160) associé à la famille d'équipement (155) suffit pour usiner les pièces d'oeuvre (105) de la famille d'équipement (155) ;
   - dans lequel l'équipement (160) comprend des outils (125) qui peuvent être mis en place de manière simultanée dans le magasin à outils (120) ;
   - dans lequel les familles d'équipement (155) sont formées de sorte que le nombre des outils (125) qui doivent être mis en place en vue de l'usinage des pièces d'oeuvre (105) enregistrées est minimisé autant que possible,

   **caractérisé en ce que**

   - plusieurs pièces d'oeuvre (105) de même type sont rassemblées en un lot (150) et les familles d'équipement (155) sont formées de sorte que, pour toutes les pièces d'oeuvre (105) de toutes les familles d'équipement (155), l'expression (M - E) * O est maximisée autant que possible ;
   - dans lequel M représente le nombre d'outils (125) qui doivent être mis en place en vue de l'usinage de la pièce d'oeuvre (105),
   - E est égal à zéro ou bien représente le nombre d'outils (125) qui doivent être mis en place exclusivement en vue de l'usinage de la pièce d'oeuvre (105),
   - et O représente le nombre de lots (150) enregistrés en tout pour la pièce d'oeuvre (105).

2. Procédé selon la revendication 1, comprenant en outre l'étape de l'usinage de pièces d'oeuvre (105) des familles d'équipement (155) au moyen de la machine-outil (110).

3. Procédé selon la revendication 1 ou 2, dans lequel au moins un des outils (125) comprend plusieurs pièces (130) qui doivent être réunies avant la mise en place de l'outil (125), et les familles d'équipement (155) sont formées de sorte que le nombre des outils (125) qui doivent être constitués par réunion avant la mise en place est minimisé autant que possible.

4. Procédé selon la revendication 3, dans lequel un stock (135) de pièces (130) est prévu et une pièce (130) du stock (135) peut être réunie à différentes autres pièces (130) du stock (135) pour donner des outils (125) différents.

5. Procédé selon l'une quelconque des revendications précédentes, dans lequel en outre :

   - un intervalle temporel est déterminé ;
   - il est décidé de celles, parmi les pièces d'oeuvre (105) enregistrées, qui doivent être usinées dans l'intervalle déterminé ;
   - seuls ceux, parmi les outils (125) de l'équipement (160), qui sont nécessaires pour l'usinage des pièces d'oeuvre (105) à usiner dans l'intervalle sont mis en place ; et
   - seules les pièces d'oeuvre (105) désignées pour ledit intervalle sont usinées au moyen de la machine-outil (110).

6. Procédé selon la revendication 5, dans lequel toutes les pièces d'oeuvre (105) doivent être usinées dans le même intervalle.

7. Procédé selon l'une quelconque des revendications précédentes, dans lequel les familles d'équipement (155) sont formées grâce à des procédés de programmation mixte en nombres entiers.

8. Procédé selon l'une quelconque des revendications précédentes, dans lequel un lot (150) qui n'est associé à aucune famille d'équipement (155) est usiné de manière séparée, en installant dans le magasin à outils (120) les outils (125) nécessaires pour l'usinage des pièces d'oeuvre (105) du lot (150) et le lot (150) est usiné au moyen de la machine-outil (110).

9. Produit-programme informatique comprenant un moyen formant code de programme destiné à la mise en oeuvre du procédé selon l'une quelconque des revendications précédentes lorsqu'il est exploité par un dispositif d'exécution (115) ou lorsqu'il est mémorisé sur un support pouvant être lu par un ordinateur.

10. Dispositif de commande (115) pour une machine-outil (110) comprenant un magasin à outils (120) destiné à des outils (125), la machine-outil (110) pouvant accueillir respectivement l'un d'entre eux en vue de l'usinage d'une pièce d'oeuvre (105), dans lequel le dispositif de commande (115) est conçu pour mettre en oeuvre les étapes suivantes :

- enregistrement de pièces d'oeuvre (105) à usiner ; et
- regroupement des pièces d'oeuvre (105) enregistrées en familles d'équipement (155) de sorte qu'un équipement (160) associé à la famille d'équipement (155) suffit pour usiner les pièces d'oeuvre (105) de la famille d'équipement (155) ;
- dans lequel l'équipement (160) comprend des outils (125) qui peuvent être mis en place de manière simultanée dans le magasin à outils (120) ;
- et dans lequel les familles d'équipement (155) sont formées de sorte que le nombre des outils (125) qui doivent être mis en place en vue de l'usinage des pièces d'oeuvre (105) enregistrées est minimisé autant que possible,

**caractérisé en ce que**

- plusieurs pièces d'oeuvre (105) de même type sont rassemblées en un lot (150) et les familles d'équipement (155) sont formées de sorte que, pour toutes les pièces d'oeuvre (105) de toutes les familles d'équipement (155), l'expression (M - E) * O est maximisée autant que possible ;
- dans lequel M représente le nombre d'outils (125) qui doivent être mis en place en vue de l'usinage de la pièce d'oeuvre (105),
- E est égal à zéro ou bien représente le nombre d'outils (125) qui doivent être mis en place exclusivement en vue de l'usinage de la pièce d'oeuvre (105),
- et O représente le nombre de lots (150) enregistrés en tout pour la pièce d'oeuvre (105).

11. Système d'usinage, comprenant une machine-outil (110) comprenant un magasin à outils (120) destiné à des outils (125), la machine-outil (110) pouvant accueillir respectivement l'un d'entre eux en vue de l'usinage d'une pièce d'oeuvre (105), ainsi qu'un dispositif de commande (115) selon la revendication 10.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **R.B.R. DE SOUZA et al.** A tool cluster based strategy for the management of cutting tools in flexible manufacturing systems. *JOURNAL OF OPERATIONS MANAGEMENT,* 01. Januar 1991, vol. 10 (1), 73-91

- **KATO K et al.** Heuristics based integrated design environment for planning and scheduling in FMS. *Proc. Intl Conf SMC,* 17. Oktober 1993, vol. 93, 737-742